# EUROPEAN PATENT APPLICATION

(11) **EP 4 550 090 A1**
(43) Date of publication of application: **07.05.2025**
(21) Application number: 23207777.6
(22) Date of filing: 03.11.2023
(51) Int. Cl.: G06F 3/01, G06F 3/03, G06F 3/0488, G06T 19/20, G06V 10/24

(54) **GLUE VOXELS FOR TOUCHLESS USER INTERFACE CONTROL**

(71) Applicant: AMERIA AG, 69124 Heidelberg (DE)
(72) Inventor: SEILER, Martin, 79238 Ehrenkirchen (DE)
(74) Representative: Best, Bastian

(57) **Abstract**

According to a first aspect of the present invention, a method for touchless control of a computer device is provided. The method may be computer-implemented. The computer device may comprise a display means. The computer device may comprise and/or may be communicatively coupled to at least one depth sensing device. The at least one depth sensing device may be configured for observing an interaction space in which touchless user input is intended to be provided by a user using an input object. The method may comprise determining, based on data captured by the at least one depth sensing device, a first interconnected voxel-arrangement representing a first part of the input object being used by the user to provide touchless user input, and a second interconnected voxel-arrangement representing a second part of the input object. The first and second interconnected voxel-arrangements may each be a virtual representation of at least part of the input object. The first and second interconnected voxel-arrangements may not be connected to each other, in particular erroneously not be connected to each other. The method may comprise creating glue voxels connecting the first and second voxel-arrangements and thus creating a superordinate interconnected voxel-arrangement representing the input object. Preferably, the superordinate interconnected voxel-arrangement corresponds to the input object, i.e., being a virtual representation of the input object.

## Description

### TECHNICAL FIELD

The present invention generally relates to controlling a touchless user interface, and more particularly to touchless control of a computer device. Further, the present invention relates to a use of a glue voxel, to a data processing apparatus for carrying out a touchless user interface control method and to a corresponding computer program.

### BACKGROUND

Computer devices having a display means have nowadays become omnipresent in various areas of modern life. The display means of such devices is usually designed to provide a Graphical User Interface (GUI) with which a user can interact. Examples for display means include electronic display screens or electronic display projectors in public places which provide useful information to the user, e. g. in shopping malls, trade shows, train stations, airports, and the like, a field which is commonly termed "digital signage". One form of such electronic displays are touchscreens that provide a user interface including interactive functions to allow users to interact with the information, e. g. by selecting control elements such as buttons, selecting items from a list, controlling a cursor, and the like. Such public touchscreens are nowadays used e. g. in ticketing machines, check-out systems in supermarkets or restaurants, interactive signposts, and the like.

However, not least because of the recent COVID-19 pandemic, users have become hesitant to use touchscreens in public places because of health concerns. This has created a desire to provide input capabilities, in particular gesture control, without having to physically touch the display. Some commercial products have already addressed this desire, for example:
The touchless air gesture technology of Gestoos (https://gestoos.com/) aims at transforming touch screens or digital displays into a touch-free experience. The Gestoos technology uses a depth sensor to allow the user to control the mouse cursor of the operating system, mapping the finger coordinates to its screen position, while the fingers stay at a distance from the screen.

GLAMOS (https://www.kickstarter.com/projects/300948436/glamos-bring-your-touchless-screens-to-life), sets out to use lidar technology to turn screens into interactive touch screens.

AIRxTOUCH (https://www.airxtouch.com/) provides an all-in-one touchless interactive kiosk. Depth sensors detect the user's finger before it touches the display and generates click events. The related international patent application WO 2015/139969 provides technological background.

Touchjet (https://www.touchjet.com/wave-lily/) aims at turning flat screen TVs into a tablet for collaboration and interactive presentations using a digital pen.

Ultraleap (https://developer.leapmotion.com/touchfree/) provides leapmotion, which is a small device (infrared camera) with relatively small range for hand tracking and hand gesture recognition. The system uses a single camera, so that the hand recognition precision is limited and decreases the bigger the screen is.

The known technologies provide the control of a touchless user interface based on detecting an input object, e. g. an input device of a hand. However, the existing solutions on the market are improvable with regard to a smooth and stable user experience, e. g. for reliably detecting touchless control input and providing comprehensible feedback for the user.

It is therefore the technical problem underlying the present invention to provide an improved touchless user interface control method, thereby at least partly increasing the usability compared to known solutions of the prior art.

### SUMMARY OF THE INVENTION

The problem is solved by the subject-matter defined in the independent claims. Advantageous modifications of embodiments of the invention are defined in the dependent claims as well as in the description and the figures.

According to a first aspect of the present invention, a method for touchless control of a computer device is provided. The method may be computer-implemented. The computer device may comprise and/or may be communicatively coupled to display means. The computer device may comprise and/or may be communicatively coupled to at least one depth sensing device. The at least one depth sensing device may be configured for observing an interaction space in which touchless user input is intended to be provided by a user using an input object. The method may comprise determining, based on data captured by the at least one depth sensing device, a first interconnected voxel-arrangement representing a first part of the input object being used by the user to provide touchless user input, and a second interconnected voxel-arrangement representing a second part of the input object. The first and second interconnected voxel-arrangements may each be a virtual representation of at least part of the input object. The first and second interconnected voxel-arrangements may not be connected to each other, in particular erroneously not be connected to each other. The method may comprise creating glue voxels connecting the first and second voxel-arrangements and thus creating a superordinate interconnected voxel-arrangement representing the input object. Preferably, the superordinate interconnected voxel-arrangement corresponds to the input object, i.e., being a virtual representation of the input object.

Examples for touchless control are movements of a cursor which is displayed to the user via the display means, click operations and/or gestures. The term touchless should be understood in relation to the computer device or display means. This means that a touchless interaction or a touchless user input does not necessarily mean that the user does not touch any objects or components of the computer device or display means in general, but that for the specific desired user interaction or user input, no touching of an input device intended for this purpose is required.

A cursor may also be referred to as a pointer. The techniques disclosed herein may provide at least one pointer, possibly multiple pointers of different types. For example, the at least one pointer may comprise a mouse pointer. The graphical representation may comprise an arrow, a hand, or the like, which may be animated. In general, the graphical representation of the mouse pointer may comprise any graphical shape and/or behavior which the skilled person is familiar with in connection with mouse pointers. As another example, the at least one pointer may comprise a user interface pointer. The graphical representation may comprise a circle, which may optionally be animated. As yet another example, the at least one pointer may comprise a text input cursor. The graphical representation may comprise a vertical line, such as "I", also called a "caret" which may be animated. In general, the graphical representation of the text input pointer may comprise any graphical shape and/or behavior which the skilled person is familiar with in connection with text input pointers.

The term user input may be understood to include any user interaction being performed by a user person. The user may provide said user input with the intention to cause the computer device to perform an action and/or to control the computer device.

For touchless control, in particular for touchless input, an input object may be used. The term input object includes any kind of suitable input objects such as a hand or a finger of a user, a dedicated input device which may for example be a pen or a spherical device. Thus, it may be understood that the input object is a physical input object, i.e., existing in the real world.

A computer device is one type of computer device, in particular being a computer device that is specifically designed to execute various computing tasks. Computer devices may come in many forms, including desktop computers, laptops, tablets, and smartphones. Also, other types of devices such as television sets, in particular so-called smart TVs, set-top-boxes and gaming devices, also referred to as gaming consoles, are examples of computer devices. Furthermore, any type of other physical apparatus with at least some computing functionality may be referred to as a computer device, such as without limitation a computer device which is built into another higher-level computer device such as a Virtual Reality device, a car, a vehicle and/or the like. Generally speaking, a computer device typically includes at least one central processing unit (CPU), at least one memory component, one or more input/output devices, and possibly various other components.

Said at least one central processing unit (CPU), at least one memory component and one or more input/output devices may function as follows: The CPU may be the central processing unit of the computer device and may be responsible for performing all, or a substantial amount of, the instructions and calculations that the device needs to execute. It may be essentially the "brain" of the computer device, and it may interpret and execute commands/instructions provided to it by a user or a device's software. The memory component of a computer device may be responsible for storing data and instructions that are required for the device's operation. This memory may be divided into two categories: temporary and permanent. Temporary memory may be used to store data that is needed only for a short period, while permanent memory may be used for long-term storage. Input/output devices may be used to interact with the computer device. Common input devices include a computer mouse, a trackpad, a trackpoint, a keyboard and a touchscreen, while common output devices include monitors, speakers, and printers. These devices allow the user to input data and commands into the device and receive output from the device. Various other components may be included in a computer device, such as graphics processing units, network interface cards, and storage devices like hard drives and solid-state drives. These components help to expand the capabilities of the device and allow it to perform more complex tasks. In summary, a computer device is a computer device that is specifically designed to execute various computing tasks. It consists of components that are necessary for its operation.

The term display means includes any means for presenting visual content to a user. This may include a broad range of technologies and formats, including electronic display screens, projection systems, projection surfaces, holographic systems, Augmented Reality devices, Virtual Reality devices, and/or the like.

Electronic display screens are perhaps the most common type of display means in use nowadays. These can include LCD, LED, OLED, Retina, E-Ink and other types of displays, which are used in devices ranging from laptops, smartphones and smartwatches to televisions and large format displays. These screens typically rely on backlighting or other forms of illumination to produce an image and may be capable to offer a wide range of color and resolution capabilities.

Projection systems are another type of display means, which use light to project an image onto a projection surface such as a screen or wall. These can include traditional projectors, as well as newer technologies such as laser projection and digital light processing (DLP). Projection systems are often used in settings such as movie theaters, conference rooms, and large spaces. Projection surfaces may come in various shapes, sizes, and materials, and can be used for a wide range of applications. The most common type of projection surface is a plain, preferably white, wall. It is a simple and inexpensive way to project images, videos, and presentations. Another type of projection surface is a projector screen. Projector screens are designed specifically for projection purposes. They come in various sizes and materials, such as vinyl, fabric, and glass beads. They are often used for applications where a particularly high quality of a projection is desired. Another type of projection surface is a transparent projection surface. Transparent projection surfaces are made of glass or acrylic and are often used for advertising or digital signage. They are common for storefront displays, museums and galleries where a user can see both the projection and an exhibit behind it.

Holographic display means are a type of display means which uses complex optics to produce three-dimensional images that appear to float in space. They may be used for a range of applications, including product visualization, scientific visualization, and entertainment.

Augmented Reality devices and Virtual Reality devices may comprise display means different to each other to create their respective immersive experiences. Augmented Reality devices typically use a transparent display means such as a head-mounted display (HMD) or a smart glass. These display means allow the user to see the real world while overlaying virtual objects on top of it. The virtual objects can be projected onto the transparent display means using various techniques such as beam-splitting, waveguide optics, or holographic displays. The virtual objects are then aligned with the real-world environment in real-time, creating the illusion that the virtual objects are a part of the real world. On the other hand, Virtual Reality devices typically use opaque displays such as a head-mounted display or a projection system. A Virtual Reality device, in particular the display means of a Virtual Reality device, may block out the real world and immerse the user in a virtual environment. The most common type of display means used in Virtual Reality devices is a high-resolution LCD or OLED screen.

The depth sensing device(s) may for example be stereo vision infrared depth sensing devices. In particular, the depth sensing device(s) may be depth camera(s). One example for such a depth camera is the Intel RealSense depth camera. It may be provided that two depth sensing devices are used, a first and a second depth sensing device. The two depth sensing devices may be placed opposing each other. For example, the first depth sensing device may be placed at or near an upper edge of the display means while the second depth sensing device may be placed at or near a lower edge of the display means, wherein the depth sensing devices face each other. For example, if the display means comprises a framing, the first and the second depth sensing device may be mounted at this framing or be integrated in the framing. In other words, the two depth sensing devices may be arranged at opposing borders of the display means, for example one being mounted at an upper border and one being mounted at a lower border of the display means such that both of the depth sensing devices are able to observe at least part of the interaction space, each from its perspective.

The at least one depth sensing device may observe the interaction space and capture data corresponding to the input object. It may occur that in the captured data parts of the input object are obscured and/or not visible due to the perspective, i.e., field of view, of the at least one depth sensing device. Light conditions, reflections, interference or disturbing objects can also be a reason why parts of the input object are obscured and/or not visible in the captured data. The obscured and/or not visible parts of the input object may cause that the captured data do not represent the input object as one interconnected object, but as separate sub-objects which, in the captured data, appear to be not connected to each other. Thus, if voxels are determined based on the captured data, a first interconnected voxel-arrangement representing a first part of the input object and a second interconnected voxel-arrangement representing a second part of the input object may be determined, wherein the first and second voxel-arrangements are erroneously not connected to each other. This may cause problems during user interaction interfering the user experience. By performing the method according to the first aspect of the present invention, the two interconnected voxel-arrangements are connected to each other by creating glue voxels. In other words, the glue voxels may fill the gaps in the voxels representing the input object. Thus, the method may in particular be understood as a method for stabilizing touchless control of a computer device.

In the following, two examples are given:
First, in case of one depth sensing device, the depth sensing device may observe the interaction space from its perspective, i.e., direction of view. The input object may be located within the interaction space, e.g., during usage by a user. Data captured by the depth sensing device is thereby obtained, wherein the input object is erroneously not represented interconnectedly in the captured data due to one or more of the above-mentioned reasons. Based on the captured data, voxels may be defined. As the input object is not represented interconnectedly in the captured data, two separate voxel-arrangements are determined: a first interconnected voxel-arrangement representing a first part of the input object and a second interconnected voxel-arrangement representing a second part of the input object, wherein the first and second voxel-arrangements are not connected to each other. In order to connect the voxel-arrangements, glue voxels are created which fill gaps between the first and second voxel arrangement thus creating a superordinate interconnected voxel-arrangement representing the input object.

Second, in case two depth sensing devices are used, the first depth sensing device observes at least part of the interaction space from its perspective while the second depth sensing device observes at least part of the interaction space from its perspective. The respectively observed parts of the interaction space may be overlapping at least in part. The input object may be located within the interaction space, e.g., during usage by a user. Data captured by the first depth sensing device and data captured by the second depth sensing device are thereby obtained. The data captured by the two depth sensing devices may be combined into one data set. Due to one or more of the above-mentioned reasons, the input object is erroneously not represented interconnectedly in the data set. One of the above-mentioned reasons which is applicable in case of two depth sensing devices, is that parts of the input object are obscured and/or not visible due to the different perspectives, i.e., fields of view, of the two depth sensing devices. In order to connect the voxel-arrangements, glue voxels are created which fill gaps between the first and second voxel arrangement thus creating a superordinate interconnected voxel-arrangement representing the input object.

The term voxel may refer to virtual elements determined based on processing routines of the computer device. In particular, voxels may be understood as volume pixels, i.e., 3D-pixels. A voxel, in the sense of the present invention, may be of various shapes and/or sizes. Preferably, all voxels in the sense of the present invention have the same shape and/or size. The voxels may have a shape of cuboids, preferably cubes.

The term interconnected voxel-arrangement may be understood as a group of voxels being adjacent to each other thus being interconnected. In that sense, the terms interconnected and adjacent may be synonyms. Therefore, voxel-arrangements not being connected to each other means that the voxel-arrangements are not adjacent to each other, i.e., there is a gap between the voxel-arrangements. Glue voxels may be voxels that are created additionally to the voxels being determined based on the captured data. The glue voxels are created in order to fill the gaps and thus to create a superordinate interconnected voxel-arrangement, i.e., being interconnected due to the existence of the glue voxels. In that sense, the term "glue" in "glue voxel" simply indicates the fact that the voxel interconnects other voxels which would otherwise be disconnected. Once created, however, a "glue voxel" is identical to a voxel which was determined based on captured sensor data. A "glue voxel" may also be understood as and referred to as an "additional voxel", a "synthetic voxel", a "programmatically created voxel" or the like to distinguish it from voxels which are determined based on the captured sensor data.

The method according to the present invention is highly advantageous, for example, for facilitating the determination of pointers and pointer candidates in a touchless user interface control method that comprises the steps of:
- detecting, based on data provided by at least one depth sensing device, an input object suitable for providing touchless user input to a computer device and/or display means;
- capturing a geometric structure virtually representing the input object;
- determining, based on the geometric structure, a touchless control pointer, wherein the touchless control pointer corresponds to a first protruding portion of the geometric structure that protrudes nearest towards the display means, i.e. which has the smallest distance to the display means compared to other portions of the geometric structure;
- determining, based on the geometric structure, a pointer candidate, wherein the pointer candidate corresponds to a second protruding portion of the geometric structure that protrudes second nearest towards the display means;
- wherein, when due to a change in position and/or form of the input object and thus of the geometric structure, the second protruding portion becomes the protruding portion protruding nearest towards the display means, switching the touchless control pointer is performed, wherein the respective pointer candidate with the respective protruding portion protruding nearest towards the display means is defined to be the touchless control pointer.

In the following, said touchless user interface control method for defining pointers and pointer candidates is described, including why the method according to the present invention advantageously facilitates said touchless user interface control method in defining pointers and pointer candidates:
The term geometric structure may be understood in particular as a virtual geometric structure, i.e. an approximate virtual representation of the input object being determined based on data captured by the at least one depth sensing device. he geometric structure may be determined comprising a plurality of voxels, analogously to the present invention.

The touchless control pointer may be understood as a portion of the input object, respectively of the geometric structure, which is intended to provide touchless user input, e.g. for interacting with the computer device and/or display means. Thus, the touchless control pointer is taken as a basis to recognize touchless user input. In other words: Since an input object, respectively the corresponding geometric structure, generally does not only consist of parts that are relevant for a touchless user input, but also has peripheral parts, the part that is relevant for a touchless input must be identified. If the input object is for example a hand, wherein an index finger is extended towards the display means, the index finger is the portion of the input object, respectively of the geometric structure, which is relevant for touchless input. At the same time, the index finger is the portion of the input object, respectively of the geometric structure, which protrudes nearest, i.e. most, towards the display means. Also for other input objects, it is a widely valid assumption that the part of the input object, i.e., geometric structure, protruding nearest towards the display means is the relevant part for touchless user input. Therefore, the step of determining, based at least in part on the geometric structure, a touchless control pointer is performed by determining a first protruding portion of the geometric structure that protrudes nearest towards the display means. This first protruding portion is then defined to be the touchless control pointer. Based at least in part on the touchless control pointer, a cursor may be calculated and displayed on the display means. The calculation may for example include a perpendicular projection of the touchless control pointer onto the display surface of the display means. In another example, the calculation may include a prolongation of the direction in which the protruding portion points, wherein the prolongation is intersected with the display surface, the intersection being set to be the cursor position. Further calculation features such as considering attributes of a user, e.g. the viewing direction or the height of a user may be provided in addition to optimize the cursor position for providing a suitable user experience during touchless interaction. If a user uses his or her hand as an input object, the middle finger may be the pointer candidate. In particular, the user may initially form the hand so that the index finger protrudes nearest, i.e. most, in the direction of the display means. As described above, the index finger is then defined to be the touchless control pointer. However, the user may have the middle finger also protruding from the hand towards the display means as a second nearest protruding portion of the hand. The user could possibly intuitively switch to the middle finger during an interaction and intend to continue the interaction with the middle finger instead of the index finger, or intend to perform one click using the middle finger in between during an interaction. In order to provide the user with a smooth and pleasant user experience, the second nearest protruding portion, which in this example is the middle finger, is defined as the pointer candidate while the user interacts using the index finger. In other words, the pointer candidate is detected and processed in advance. If the user then switches between the fingers during a touchless interaction, there is no interruption and no noticeable latency during the touchless interaction. In particular, at the moment of switching, the pointer candidate can become the touchless control pointer.

The method according to the present invention avoids a situation where parts of the input object are not recognized to be interconnected thus interfering the user experience. For example, referring to the example above, it may occur that in the captured data, the middle finger is erroneously not connected to the rest of the user's hand. In such a situation, the pointer candidate would not be defined correctly. Using the method according to the present invention, for example for enhancing the precision of the pointer candidate determination as described above, ensures that the basis for determining the touchless control pointer and the pointer candidate is detected correctly, i.e., representing the entire relevant portion of the input object, i.e., the entire user's hand including all fingers. Thus, this advantageously facilitates a smooth, reliable and predictable user experience.

In general, and in particular independently of the above exemplary utilization of the present invention, the proposed inventive method enables input objects to be recognized with a higher precision, i.e. with a higher degree of fidelity to reality. In general, and in particular independently of the above exemplary utilization of the present invention, the proposed inventive method enables input objects to be recognized with a higher precision, i.e. with a higher degree of fidelity to reality.

Thus, the implementation of the present invention in the field of touchless control significantly improves the user experience.

It may be provided that the first and second interconnected voxel arrangements not being connected to each other is caused by a limited view of the at least one depth sensing device, which leads to missing voxels.

The method may comprise generating a control command based on the superordinate interconnected voxel-arrangement, in particular based on orientation and/or movement of the superordinate interconnected voxel-arrangement. The superordinate interconnected voxel-arrangement may be oriented and/or moved corresponding to the input object used by the user for providing touchless user input.

Examples for control commands are given for the sake of better understanding, as follows:
- move a cursor, in particular a mouse cursor or user interface pointer, displayed by the display means to a desired position (may correspond for example to moving a mouse or hovering over a touchscreen);
- perform a left click (may correspond for example to clicking the left button of a mouse or clicking on a touchscreen);
- perform a right click (may correspond for example to clicking the right button of a mouse or a predetermined touchscreen input);
- perform a double left click (may correspond for example to double clicking the left button of a mouse or double clicking on a touchscreen);
- perform click and hold (may correspond for example to clicking and holding the left button of a mouse or clicking and holding using a touchscreen);
- scroll up (may correspond for example to moving the scrolling wheel of a mouse or to swiping on a touchscreen);
- scroll down (may correspond for example to moving the scrolling wheel of a mouse or to swiping on a touchscreen);
- scroll to the left (may correspond for example to moving the scrolling wheel of a mouse or to swiping on a touchscreen);
- scroll to the right (may correspond for example to moving the scrolling wheel of a mouse or to swiping on a touchscreen);
- perform zoom in (may correspond for example to moving the scrolling wheel while pressing Ctrl-button of a keyboard or to zooming using a touchscreen);
- perform zoom out (may correspond for example to moving the scrolling wheel while pressing Ctrl-button of a keyboard or to zooming using a touchscreen).

The method may comprise obtaining data captured by the at least one depth sensing device, wherein the data includes a point cloud representing at least part of the input object in the interaction space. The method may comprise transforming the point cloud into a voxel cloud including interconnected voxel-arrangements. Preferably, the steps of obtaining and transforming are performed prior to the step of determining the first and second interconnected voxel-arrangement.

Using voxels for performing the method of the present invention saves computational resources since the captured data is processed in an abstracted manner. For example, if initially, the captured data is in the form of a point cloud, the points of the points cloud can be assigned to respective associated voxels located at a corresponding position withing the interaction space. Based on the voxels, any further processing steps and/or calculations can be performed with less need for processing resources.

In case of more than one depth sensing device, the point clouds captured by each of the depth sensing devices may be combined into one point cloud and then transformed into voxels.

The method may comprise combining respective adjacent points into voxels, the number of voxels in the voxel cloud being less than the number of points in the point cloud; and/or defining an initial voxel grid independent from the point cloud, superimposing the point cloud with the initial voxel grid, and determining the voxel cloud by deleting any voxels of the initial voxel grid which do not include points and/or by defining the voxel cloud based on voxels of the initial voxel grid which include at least one point of the point cloud.

Said processing variations reduce the need for processing resources when performing the method according to the present invention. In particular, defining an initial voxel grid independent from the point cloud and superimposing the point cloud with the initial voxel grid is advantageous with regard to processing resources.

The method may comprise determining, based on the captured data, at least one further interconnected voxel-arrangement representing at least one further part of the input object being used by the user to provide touchless user input, wherein the at least one further voxel-arrangement is not connected to the first and/or second voxel-arrangement. The method may comprise creating glue voxels for connecting each of the at least one further voxel-arrangements and thus connecting each of the at least one further voxel-arrangements to another voxel-arrangement in order to create the superordinate interconnected voxel-arrangement representing the input object.

The present invention, in particular the creation of glue voxels, is also applicable to cases where more than two separate voxel-arrangements occur for the reasons mentioned above. Thus, any number of separate voxel-arrangements can be interconnected to generate a precise representation of the input object that is as realistic as possible.

It may be provided that creating glue voxels which connect different interconnected voxel-arrangements is only performed under the condition that the distance between the respective interconnected voxel-arrangements is lower than a distance threshold.

Implementing this feature, it is advantageously avoided that detected voxel-arrangements that in fact do not represent any part of the input object, are connected to voxel-arrangements that represent parts of the input object. Thus, other objects, apart from the input object, are filtered out.

Further, the number of created glue voxels is kept low. This, on the one hand, reduces the need for processing resources. And on the other hand, keeping the number of created glue voxels low, ensures that the representation of the input object is not unnecessarily blurred.

It may be further provided that glue voxels are only created at a portion of the interconnected voxel-arrangements which are nearest to each other, thus connecting the interconnected voxel-arrangements only at their nearest portions, i.e., keeping the number of glue voxels as small as possible.

It may be provided that creating glue voxels for connecting different interconnected voxel-arrangements is performed at least by creating glue voxels on a side of the interconnected voxel-arrangements facing away from the display means, in particular on a side of the interconnected voxel-arrangements facing essentially orthogonally away from the display means.

It may be further provided that the number of glue voxels being created adjacent to each other in a direction facing away from the display means, is determinable and/or adjustable, preferably by the user.

It may be provided that creating glue voxels for connecting different interconnected voxel-arrangements is performed at least by creating glue voxels on a side of the interconnected voxel-arrangements facing away from the depth sensing device, in particular on a side of the interconnected voxel-arrangements facing essentially orthogonally away from the depth sensing device. In case of more than one depth sensing devices, glue voxels may be created on sides of the interconnected voxel-arrangements facing away from each of the depth sensing devices.

It may be further provided that the number of glue voxels being created adjacent to each other in a direction facing away from the depth sensing device, is determinable and/or adjustable, preferably by the user.

It may be particularly preferred that creating glue voxels for connecting different interconnected voxel-arrangements is performed at least by creating glue voxels on a side of the interconnected voxel-arrangements facing away from the display means and on a side of the interconnected voxel-arrangements facing away from the depth sensing device.

The underlying rules that influence, preferably determine, where and to what extent and/or in what number glue voxels are created, are an important factor having a direct impact on the output of the method according to the present invention. One aim may be to connect interconnected voxel-arrangements which should have been connected in a manner such that the resulting superordinate interconnected voxel-arrangement is as realistic as possible. For this, the captured data representing the input object should not be unnecessarily blurred, by creating too many glue voxels and/or creating glue voxels at non-optimum positions. At the same time, it should be ensured that almost all voxels representing relevant parts of the input object are connected to each other in order to not miss relevant parts of user input during usage.

According to various tests, refining and validation routines, apparently glue voxels creating glue voxels on a side of the interconnected voxel-arrangements facing away from the display means and on a side of the interconnected voxel-arrangements facing away from the depth sensing device make the most sense resulting in a realistic superordinate voxel-arrangement representing almost all relevant parts of the input object.

One reason why for example creating glue voxels on a side of the interconnected voxel-arrangements facing away from the depth sensing device makes sense, is that parts of the input object itself may hide other parts of the input object due to the perspective and field of view of the depth sensing device. For example, the thumb may be hidden by another part of the hand when the user's hand is used as an input object.

One reason why for example creating glue voxels on a side of the interconnected voxel-arrangements facing away from the display means makes sense, is that the depth sensing devices may be mounted at the display means, e.g., at a framing part of the display means, thus having a field of view staring from the display means. As a result, parts of the input object itself may hide other parts of the input object due to the perspective and field of view of the depth sensing device. For example, if the user's hand is used as an input object, the fingers facing towards the display means may hide parts of the palm of the user's hand.

It may be provided that underlying rules that influence, preferably determine, where and to what extent and/or in what number glue voxels are created, are defined by a machine learning model, and/or that determining where and to what extent and/or in what number glue voxels are created is performed by a machine learning model.

Suitable machine learning models are based on a convolutional neural network (CNN) or a recurrent neural network (RNN) or a combination thereof. CNNs and RNNs are both types of deep learning algorithms commonly used in machine learning applications, including gesture recognition. A CNN is a type of neural network that is particularly well-suited for image and video recognition tasks.

Generally speaking, a CNN uses convolutional layers to extract features from input data, followed by pooling layers to reduce the dimensionality of the feature maps. The output of the convolutional and pooling layers is then flattened and fed into one or more fully connected layers, which are responsible for making the final classification decision. The main advantage of CNNs is that they can automatically learn hierarchical representations of input data, which makes them very effective at recognizing complex patterns in images and videos. An RNN, on the other hand, is a type of neural network that is particularly well-suited for sequence data, such as time series or natural language. An RNN uses recurrent connections to propagate information from one time step to the next. This enables the network to maintain an internal state or memory of previous inputs, which is useful for tasks such as speech recognition or language translation. The main advantage of RNNs is their ability to capture temporal dependencies in the input data, which makes them very effective at modeling sequential data. One key difference between CNNs and RNNs is that CNNs are designed to operate on fixed-size input data (such as images of a fixed resolution), whereas RNNs can handle variable-length input data (such as sequences of different lengths). Another difference is that CNNs are better suited for tasks that involve spatial information (such as image classification), while RNNs are better suited for tasks that involve temporal information (such as speech recognition). In an embodiment of the present invention, it may be provided to use a combination of both CNNs and RNNs since for video recognition tasks, both spatial and temporal information are important. If the present invention is implemented to work based on sensor data essentially being a video image stream, the combination of CNNs and RNNs are particularly advantageous. A CNN can be used to extract spatial features from each frame of the video, which are then fed into an RNN to model the temporal dependencies between frames.

The machine learning model may be trained using a large dataset of labeled examples, where each example consists of a time series of data points and a corresponding label that indicates the type of input object to be detected. The training data may be used to adjust the weights and biases of the model so that it can accurately classify new, unseen examples. The training process typically involves an iterative approach, where the model is presented with a batch of training examples and the weights and biases are adjusted to minimize the difference between the predicted output and the actual label. This process is repeated for many epochs until the model has learned to accurately create glue voxels and/or define rules on the basis of which glue voxels are created.

The type of AI that may be used in this context is typically supervised learning, where the model is trained using a labeled dataset. However, unsupervised learning approaches such as clustering and anomaly detection can also be used in the context of the present invention, e.g., in order to fill in the database as mentioned above.

By using a machine learning model, steps of the method may be performed with higher accuracy and efficiency.

It may be provided that created glue voxels are locked to respective interconnected voxel-arrangements at least during usage of the computer device.

Locking the created glue voxels may provide a benefit if the user, during usage, moves the input object out of the interaction space and afterwards moves the input object into the interaction space in order to provide further touchless user input. Locked glue voxels can provide a useful basis or starting point for re-evaluating the new situation with as little computational effort as possible, and then determining the proper glue voxels via an adjustment rather than a recalculation.

It may be provided that the size of voxels and glue voxels is the same. It may be provided that the shape of voxels and glue voxels is the same.

According to a second aspect of the present invention, a use of a glue voxel in a method according to the first aspect of the present invention is provided.

All technical implementation details and advantages described with respect to the first aspect of the present invention are self-evidently mutatis mutandis applicable for the second aspect of the present invention and vice versa.

According to a third aspect of the present invention, a data processing apparatus, preferably a computer device or a control unit for a computer device, comprising means for carrying out a method according to the first aspect of the present invention.

All technical implementation details and advantages described with respect to the first and second aspects of the present invention are self-evidently mutatis mutandis applicable for the third aspect of the present invention and vice versa.

According to a fourth aspect of the present invention, a computer program or a computer-readable medium having stored thereon the computer program, it provided, the computer program comprising instructions which, when the program is executed by a computer, preferably a data processing apparatus according to the third aspect of the present invention, causes the computer to carry out a method according to the first aspect of the present invention.

All technical implementation details and advantages described with respect to the first, second and third aspects of the present invention are self-evidently mutatis mutandis applicable for the fourth aspect of the present invention and vice versa.

### BRIEF DESCRIPTION OF THE DRAWINGS

The disclosure may be better understood by reference to the following drawings:
- Fig. 1:: A schematic illustration of a computer device according to embodiments of the present invention.
- Fig. 2:: A schematic illustration of an interaction space according to embodiments of the present invention.
- Fig. 3:: A schematic illustration of voxels representing a captured input object according to embodiments of the present invention.
- Fig. 4:: A first schematic illustration of voxels and glue voxels representing a captured input object according to embodiments of the present invention.
- Fig. 5:: A second schematic illustration of voxels and glue voxels representing a captured input object according to embodiments of the present invention.
- Fig. 6:: A third schematic illustration of voxels and glue voxels representing a captured input object according to embodiments of the present invention.
- Fig. 7:: A fourth schematic illustration of voxels and glue voxels representing a captured input object according to embodiments of the present invention.
- Fig. 8:: A schematic illustration of a superordinate interconnected voxel-arrangement according to embodiments of the present invention.
- Fig. 9:: A schematic illustration of an application example where embodiments of the present invention are particularly advantageous.

### DETAILED DESCRIPTION

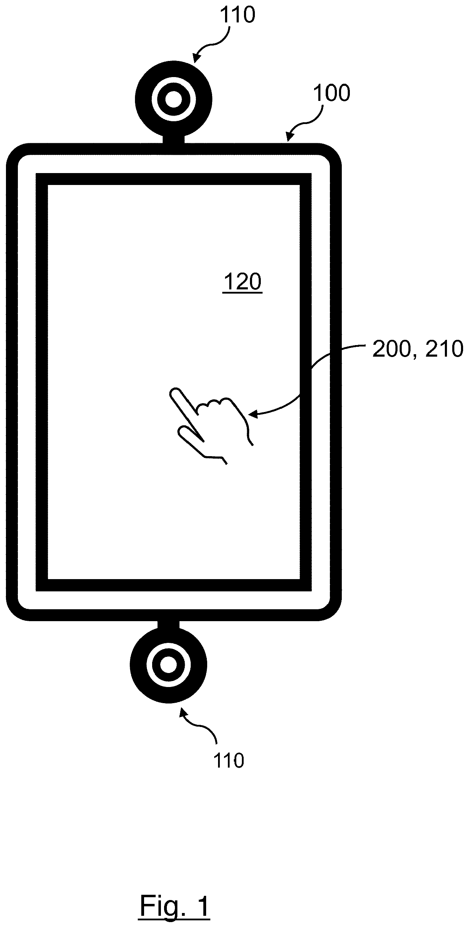

The computer device 100 as illustrated in figure 1 comprises a display means 120. For example, the computer device 100 and the display means 120 may be integrally built, i.e., having one housing. Alternatively, the computer device 100 may be communicatively coupled to the display means 120. The computer device 100 in figure 1 comprises two depth sensing devices 110 being placed at opposing edges of the display means 120. As depicted, a user 200 may provide touchless user input using an input object 210 which may be a user's hand.

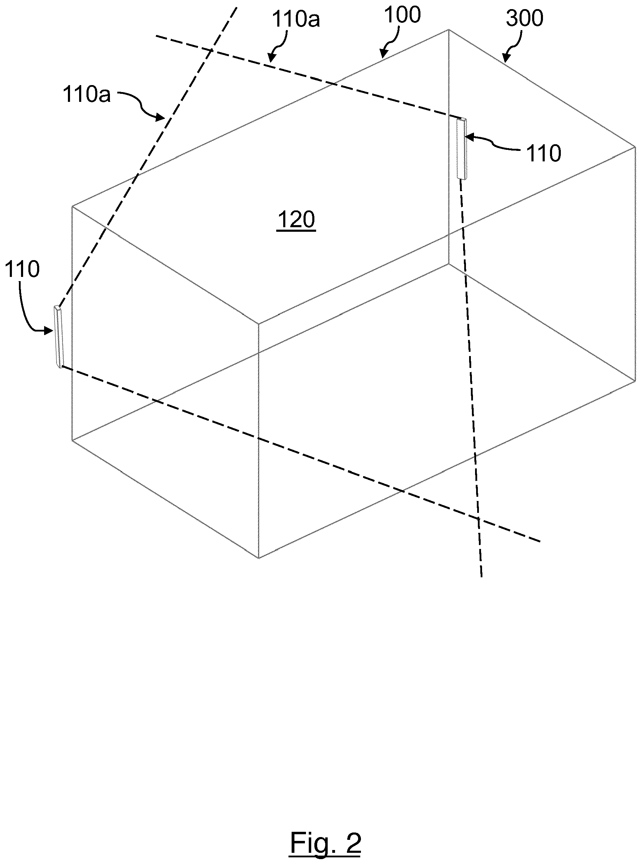

Figure 2 illustrates an interaction space 300 being located adjacent to the display means 120 of the computer device 100. Two depth sensing devices 110 are arranged at opposing edges of the display means 120 having a field of view 110a facing each other. Each depth sensing device 110 is configured to capture part of the interaction space 300 corresponding to its respective field of view 110a. The fields of view 110a and thus the respectively captured parts of the interaction space 30 may be overlapping.

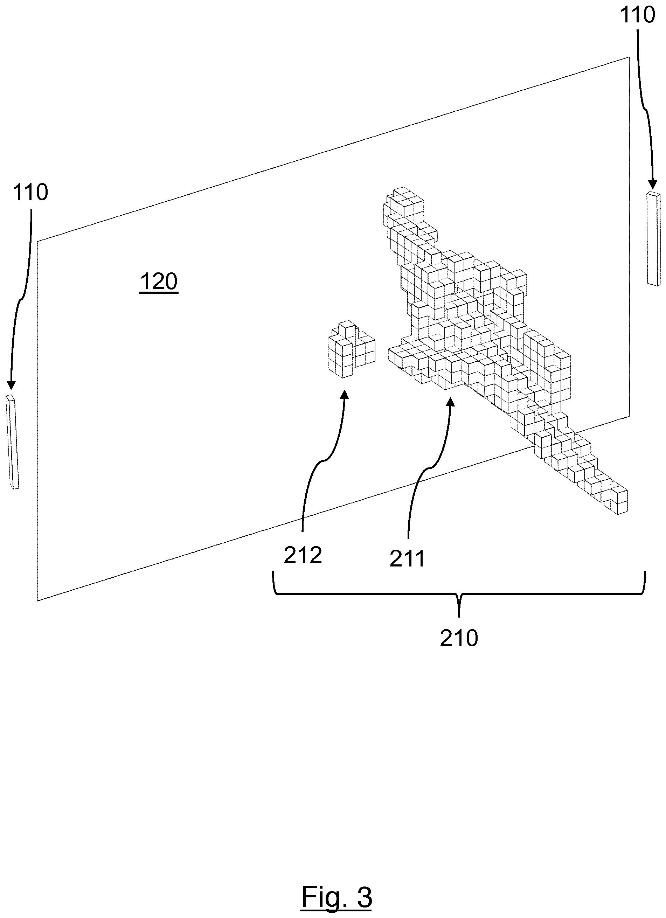

Figure 3 illustrates an input object 210 being virtually represented by voxels, including a first interconnected voxel-arrangement 211 and a second interconnected voxel-arrangement 212. As the input object 210 in the depicted example is a user's hand, the second interconnected voxel-arrangement 212 represents the thumb of the user's hand, wherein the first interconnected voxel-arrangement 211 represents the rest of the user's hand, including the palm and the fingers of the user's hand other than the thumb. The first and second interconnected voxel-arrangements 211, 212 are erroneously not connected to each other due to the perspectives and field of views of the depth sensing devices 110. In particular, the missing connection part between the first interconnected voxel-arrangement 211 and second interconnected voxel-arrangement 212 is hidden by other parts of the input object 210 that are captured by the depth sending devices 110.

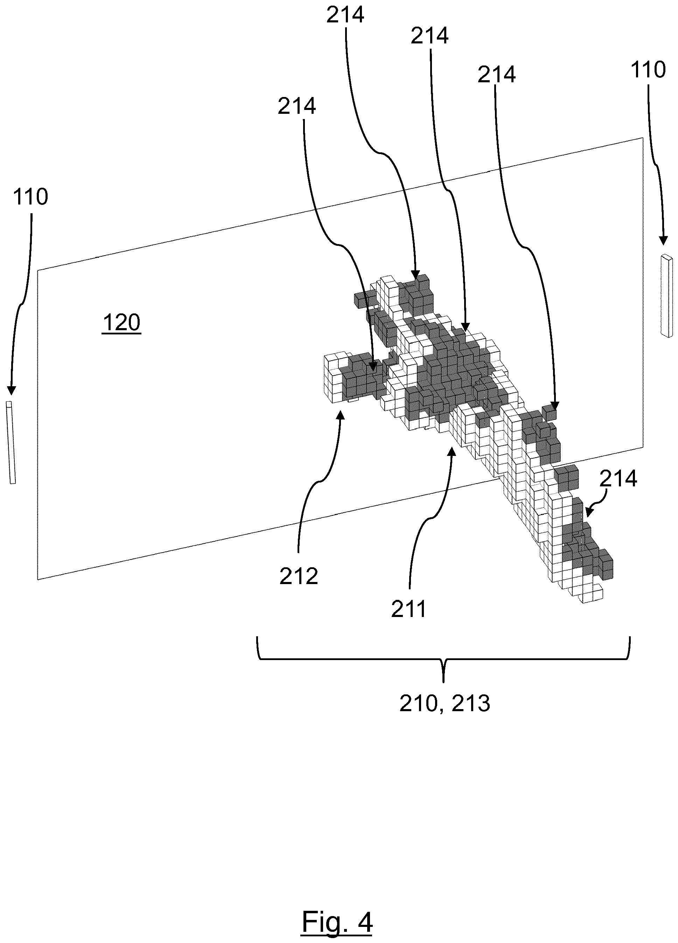

In figure 4, the erroneously not connected first and second interconnected voxel-arrangements 211, 212 are connected to each other by glue voxels 214. Of course, not all created glue voxels 214 contribute to connect the first and second interconnected voxel-arrangements 211, 212 but they at least fill the gap in order to establish the missing connection and in order to create a superordinate interconnected voxel-arrangement 213 virtually representing all relevant parts of the input object 210. In other words, the thumb is now connected to the rest of the user's hand. For that, creating glue voxels for connecting different interconnected voxel-arrangements 211, 212 is performed by creating glue voxels on a side of the interconnected voxel-arrangements 211, 212 facing away from the display means 120 as well as on a side of the interconnected voxel-arrangements 211, 212 facing away from the depth sensing devices 110.

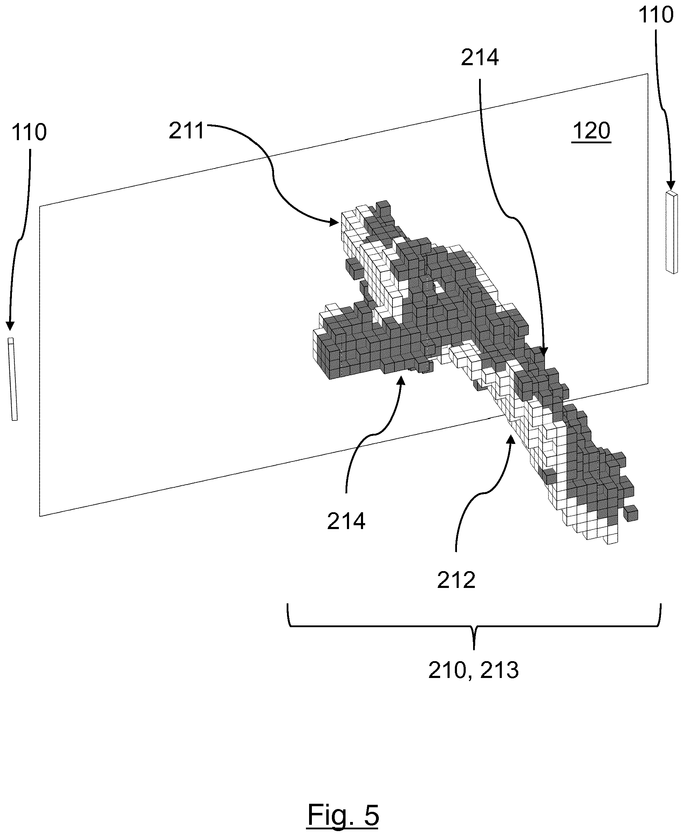

A similar situation with slightly different parameters with respect to the number of glue voxels 214 to be created in respective directions, i.e., on respective sides of the interconnected voxel-arrangements 211, 212, is depicted in figure 5. The first interconnected voxel-arrangement 211 in this illustration represents a part of the input object 210 which is oriented towards the display means 120, i.e., including the fingers of the user's hand being the input object 210. On the other hand, the second interconnected voxel-arrangement 212 in this illustration represents a part of the input object 210 which is oriented away from the display means 120, i.e., including the palm and partially the arm of the user's hand being the input object 210.

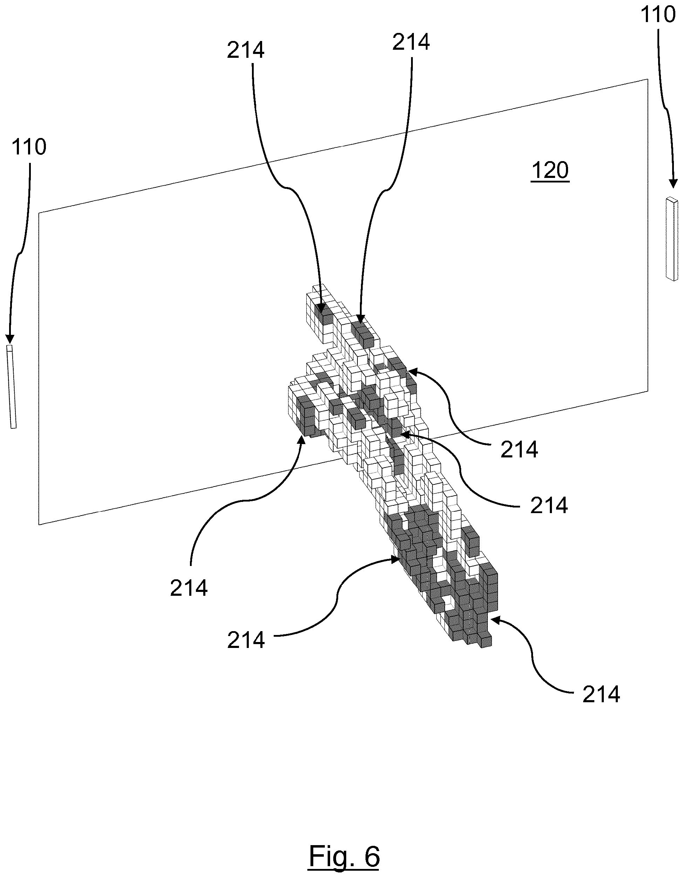

In figure 6, an exemplary situation is depicted where creating glue voxels 214 for connecting different interconnected voxel-arrangements 211, 212 is performed only by creating glue voxels 214 on a side of the interconnected voxel-arrangements 211, 212 facing away from the display means 120, in particular on a side of the interconnected voxel-arrangements 211, 212 facing essentially orthogonally away from the display means 120. Thus, a superordinate interconnected voxel-arrangement 213 is created representing the input object 210 of the user 200.

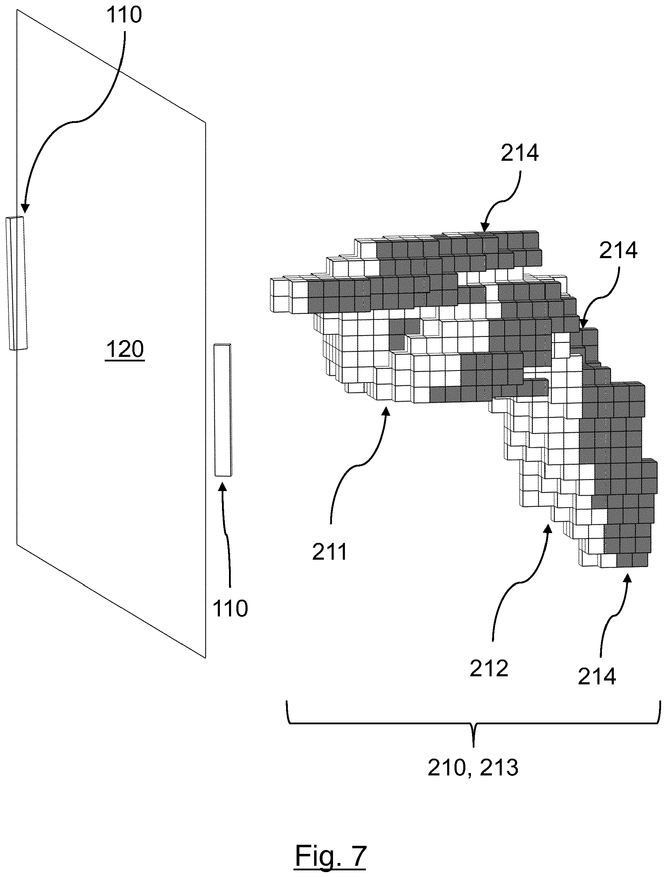

In figure 7, an exemplary situation is depicted where creating glue voxels 214 for connecting different interconnected voxel-arrangements 211, 212 is performed only by creating glue voxels 214 on a side of the interconnected voxel-arrangements 211, 212 facing away from the respective depth sensing devices 110, in particular on a side of the interconnected voxel-arrangements 211, 212 facing essentially orthogonally away from the respective depth sensing devices 110. Thus, a superordinate interconnected voxel-arrangement 213 is created representing the input object 210 of the user 200.

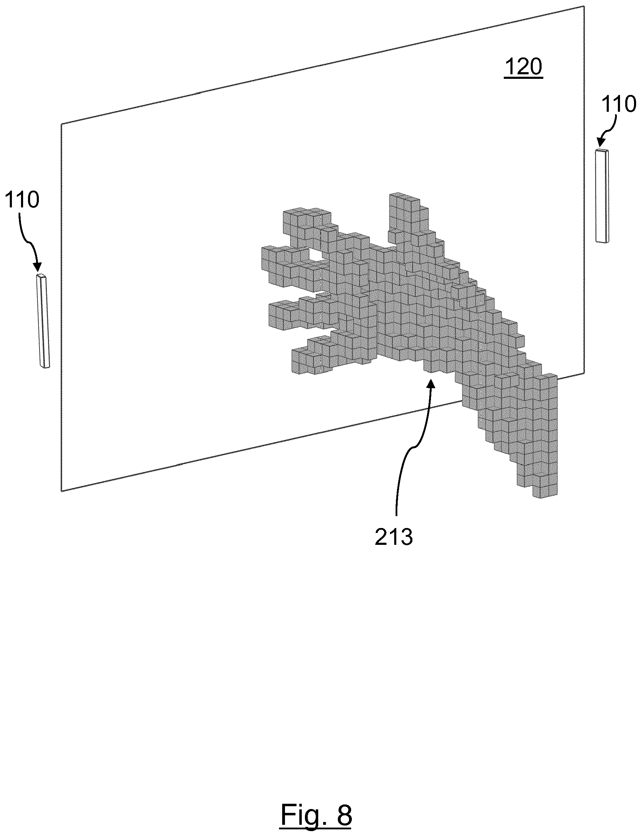

In figure 8, a superordinate interconnected voxel-arrangement 213 is illustrated. As can be easily seen by the contour of the superordinate interconnected voxel-arrangement 213, the input object 210 used by the user 200 is the user's hand.

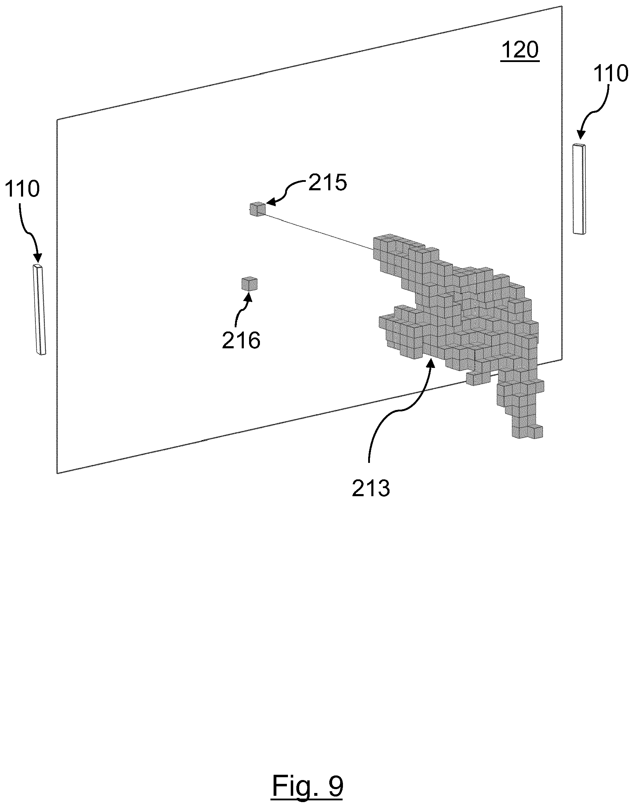

Figure 9 illustrates an application example is shown, where the method according to the present invention is particularly advantageous. The application example includes a method for determining a pointer 215 and a pointer candidate 216 in a touchless user interface control method. In this method, first it may be performed detecting, based on data provided by at least one depth sensing device 110, an input object 210 suitable for providing touchless user input to a computer device 100 and/or display means 120. Second, it may be performed capturing a geometric structure virtually representing the input object 210. Third, it may be performed determining, based on the geometric structure, a touchless control pointer 215, wherein the touchless control pointer 215 corresponds to a first protruding portion of the geometric structure that protrudes nearest towards the display means 120, i.e. which has the smallest distance to the display means 120 compared to other portions of the geometric structure. Fourth, the method may comprise determining, based on the geometric structure, a pointer candidate 216, wherein the pointer candidate 216 corresponds to a second protruding portion of the geometric structure that protrudes second nearest towards the display means 120. When due to a change in position and/or form of the input object 210 and thus of the geometric structure, the second protruding portion becomes the protruding portion protruding nearest towards the display means 120, switching the touchless control pointer 215 may be performed, wherein the respective pointer candidate 216 with the respective protruding portion protruding nearest towards the display means 120 is defined to be the touchless control pointer 215, i.e., replacing the former touchless control pointer 215.

As can be seen from the contour of the superordinate interconnected voxel-arrangement 213, the index finger is the portion of the input object 210, which protrudes nearest, i.e. most, towards the display means 120. Also for other input objects 210, it is a widely valid assumption that the part of the input object 210 protruding nearest towards the display means 120 is the relevant part for touchless user input. Therefore, the step of determining a touchless control pointer 215 is performed by determining a first protruding portion that protrudes nearest towards the display means 120. This first protruding portion is then defined to be the touchless control pointer 215. Based at least in part on the touchless control pointer 215, a cursor may be calculated and displayed by the display means 120. The calculation may for example include a perpendicular projection of the touchless control pointer 215 onto the display surface of the display means 120. In another example, the calculation may include a prolongation of the direction in which the protruding portion points, wherein the prolongation is intersected with the display surface, the intersection being set to be the cursor position. Further calculation features such as considering attributes of a user 200, e.g. the viewing direction or the height of a user may be provided in addition to optimize the cursor position for providing a suitable user experience during touchless interaction. If user's hand is used as an input object 210, the middle finger may be the pointer candidate 216. In particular, the user may initially form the hand so that the index finger protrudes nearest, i.e. most, in the direction of the display means 120. As described above, the index finger is then defined to be the touchless control pointer 215. However, the user may have the middle finger also protruding from the hand towards the display means 120 as a second nearest protruding portion of the hand. The user 200 could possibly intuitively switch to the middle finger during an interaction and intend to continue the interaction with the middle finger instead of the index finger, or intend to perform one click using the middle finger in between during an interaction. In order to provide the user with a smooth and pleasant user experience, the second nearest protruding portion, which in this example is the middle finger, is defined as the pointer candidate 216 while the user 200 interacts using the index finger. In other words, the pointer candidate 216 may be detected and processed in advance. If the user 200 then switches between the fingers during a touchless interaction, there is no interruption and no noticeable latency during the touchless interaction. In particular, at the moment of switching, the pointer candidate can become the touchless control pointer 215.

The method according to the present invention avoids a situation where parts of the input object 210 are not recognized to be interconnected thus interfering the user experience. For example, referring to the example above, it may occur that in the captured data, the middle finger is erroneously not connected to the rest of the user's hand. In such a situation, the pointer candidate 216 would not be defined correctly. Using the method according to the present invention, for example for enhancing the precision of the pointer candidate determination as described above, ensures that the basis for determining the touchless control pointer 215 and the pointer candidate 216 is detected correctly, i.e., representing the entire relevant portion of the input object 210, i.e., the entire user's hand including all fingers. Thus, this advantageously facilitates a smooth, reliable and predictable user experience.

### Machine Learning

Certain embodiments of the invention may be based on using a machine-learning model or machine-learning algorithm. Machine learning may refer to algorithms and statistical models that computer systems may use to perform a specific task without using explicit instructions, instead relying on models and inference. For example, in machine-learning, instead of a rule-based transformation of data, a transformation of data may be used that is inferred from an analysis of historical and/or training data. For example, the content of images may be analyzed using a machine-learning model or using a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be recognized using the machine-learning model. The same principle may be used for other kinds of sensor data as well: By training a machine-learning model using training sensor data and a desired output, the machine-learning model "learns" a transformation between the sensor data and the output, which can be used to provide an output based on non-training sensor data provided to the machine-learning model. The provided data (e.g., sensor data, meta data and/or image data) may be preprocessed to obtain a feature vector, which is used as input to the machine-learning model.

Machine-learning models may be trained using training input data. The examples specified above use a training method called "supervised learning". In supervised learning, the machine-learning model is trained using a plurality of training samples, wherein each sample may comprise a plurality of input data values, and a plurality of desired output values, i.e., each training sample is associated with a desired output value. By specifying both training samples and desired output values, the machine-learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm (e.g., a classification algorithm, a regression algorithm or a similarity learning algorithm). Classification algorithms may be used when the outputs are restricted to a limited set of values (categorical variables), i.e., the input is classified to one of the limited set of values. Regression algorithms may be used when the outputs may have any numerical value (within a range). Similarity learning algorithms may be similar to both classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (pre-defined) similarity criteria, while being dissimilar to input values that are included in other clusters. Reinforcement learning is a third group of machine-learning algorithms that may be used to train the machine-learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards).

Furthermore, some techniques may be applied to some of the machine-learning algorithms. For example, feature learning may be used. In other words, the machine-learning model may at least partially be trained using feature learning, and/or the machine-learning algorithm may comprise a feature learning component. Feature learning algorithms, which may be called representation learning algorithms, may preserve the information in their input but also transform it in a way that makes it useful, often as a pre-processing step before performing classification or predictions. Feature learning may be based on principal components analysis or cluster analysis, for example.

In some examples, anomaly detection (i.e., outlier detection) may be used, which is aimed at providing an identification of input values that raise suspicions by differing significantly from the majority of input or training data. In other words, the machine-learning model may at least partially be trained using anomaly detection, and/or the machine-learning algorithm may comprise an anomaly detection component.

In some examples, the machine-learning algorithm may use a decision tree as a predictive model. In other words, the machine-learning model may be based on a decision tree. In a decision tree, observations about an item (e.g., a set of input values) may be represented by the branches of the decision tree, and an output value corresponding to the item may be represented by the leaves of the decision tree. Decision trees may support both discrete values and continuous values as output values. If discrete values are used, the decision tree may be denoted a classification tree, if continuous values are used, the decision tree may be denoted a regression tree.

Association rules are a further technique that may be used in machine-learning algorithms. In other words, the machine-learning model may be based on one or more association rules. Association rules are created by identifying relationships between variables in large amounts of data. The machine-learning algorithm may identify and/or utilize one or more relational rules that represent the knowledge that is derived from the data. The rules may e.g. be used to store, manipulate or apply the knowledge.

Machine-learning algorithms are usually based on a machine-learning model. In other words, the term "machine-learning algorithm" may denote a set of instructions that may be used to create, train or use a machine-learning model. The term "machine-learning model" may denote a data structure and/or set of rules that represents the learned knowledge (e.g., based on the training performed by the machine-learning algorithm). In embodiments, the usage of a machine-learning algorithm may imply the usage of an underlying machine-learning model (or of a plurality of underlying machine-learning models). The usage of a machine-learning model may imply that the machine-learning model and/or the data structure/set of rules that is the machine-learning model is trained by a machine-learning algorithm.

For example, the machine-learning model may be an artificial neural network (ANN). ANNs are systems that are inspired by biological neural networks, such as can be found in a retina or a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of its inputs (e.g., of the sum of its inputs). The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, i.e. to achieve a desired output for a given input.

Alternatively, the machine-learning model may be a support vector machine, a random forest model or a gradient boosting model. Support vector machines (i.e., support vector networks) are supervised learning models with associated learning algorithms that may be used to analyze data (e.g., in classification or regression analysis). Support vector machines may be trained by providing an input with a plurality of training input values that belong to one of two categories. The support vector machine may be trained to assign a new input value to one of the two categories. Alternatively, the machine-learning model may be a Bayesian network, which is a probabilistic directed acyclic graphical model. A Bayesian network may represent a set of random variables and their conditional dependencies using a directed acyclic graph. Alternatively, the machine-learning model may be based on a genetic algorithm, which is a search algorithm and heuristic technique that mimics the process of natural selection.

### General aspects

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some or all of the method steps may be executed by (or using) a hardware apparatus, such as a processor, a microprocessor, a programmable computer or an electronic circuit. Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments of the invention provide a data carrier having electronically readable control signals, which are capable of cooperating with a programmable computer system, such that one of the methods described herein is performed.

Generally, embodiments of the invention can be implemented as a computer program (product) with a program code, the program code being operative for performing one of the methods when the computer program product runs on a computer. The program code may, for example, be stored on a machine-readable carrier. Other embodiments comprise the computer program for performing one of the methods described herein, stored on a machine-readable carrier. In other words, an embodiment of the present invention is, therefore, a computer program having a program code for performing one of the methods described herein, when the computer program runs on a computer.

A further embodiment of the invention provides a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention provides a data stream or a sequence of signals representing the computer program for performing one of the methods described herein. The data stream or the sequence of signals may, for example, be configured to be transferred via a data communication connection, for example, via the internet.

A further embodiment of the invention provides a processing means, for example, a computer or a programmable logic device, configured to, or adapted to, perform one of the methods described herein.

A further embodiment of the invention provides a computer having installed thereon the computer program for performing one of the methods described herein.

A further embodiment of the invention provides an apparatus or a system configured to transfer (e.g., electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### REFERENCE SIGNS

- 100: computer device
- 110: depth sensing device
- 110a: field of view
- 120: display means
- 200: user
- 210: input object
- 211: first interconnected voxel-arrangement
- 212: second interconnected voxel-arrangement
- 213: superordinate interconnected voxel-arrangement
- 214: glue voxel
- 215: touchless control pointer
- 216: pointer candidate
- 300: interaction space

## Claims

1. A computer-implemented method for touchless control of a computer device (100), wherein the computer device (100) comprises and/or is communicatively coupled to display means (120) and at least one depth sensing device (110), the at least one depth sensing device (110) being configured for observing an interaction space (300) in which touchless user (200) input is intended to be provided by a user (200) using an input object (210), the method comprising:
determining, based on data captured by the at least one depth sensing device (110), a first interconnected voxel-arrangement (211) representing a first part of the input object (210) being used by the user (200) to provide touchless user (200) input, and a second interconnected voxel-arrangement (212) representing a second part of the input object (210), wherein the first and second voxel-arrangements (211, 212) are not connected to each other;
creating glue voxels (214) connecting the first and second voxel-arrangements (211, 212) and thus creating a superordinate interconnected voxel-arrangement (213) representing the input object (210).

2. The computer-implemented method of claim 1, wherein the first and second interconnected voxel arrangements not being connected to each other is caused by a limited view of the at least one depth sensing device (110), which leads to missing voxels.

3. The computer-implemented method of any one of the preceding claims, the method comprising:
generating a control command based on the superordinate interconnected voxel-arrangement (213), in particular based on orientation and/or movement of the superordinate interconnected voxel-arrangement (213).

4. The computer-implemented method of any one of the preceding claims, the method comprising:
obtaining data captured by the at least one depth sensing device (110), wherein the data includes a point cloud representing the input object (210) in the interaction space (300);
transforming the point cloud into a voxel cloud including interconnected voxel-arrangements;
optionally wherein the steps of obtaining and transforming are performed prior to the step of determining the first and second interconnected voxel-arrangement (212).

5. The computer-implemented method of claim 4, wherein transforming the point cloud into a voxel cloud includes:
combining respective adjacent points into voxels, the number of voxels in the voxel cloud being less than the number of points in the point cloud; and/or
defining an initial voxel grid independent from the point cloud, superimposing the point cloud with the initial voxel grid, and determining the voxel cloud by deleting any voxels of the initial voxel grid which do not include points and/or by defining the voxel cloud based on voxels of the initial voxel grid which include at least one point of the point cloud.

6. The computer-implemented method of any one of the preceding claims, the method comprising:
determining, based on the captured data, at least one further interconnected voxel-arrangement representing at least one further part of the input object (210) being used by the user (200) to provide touchless user (200) input, wherein the at least one further voxel-arrangement is not connected to the first and/or second voxel-arrangement;
creating glue voxels (214) for connecting each of the at least one further voxel-arrangements and thus connecting each of the at least one further voxel-arrangements to another voxel-arrangement in order to create the superordinate interconnected voxel-arrangement (213) representing the input object (210).

7. The computer-implemented method of any one of the preceding claims, wherein creating glue voxels (214) which connect different interconnected voxel-arrangements is only performed under the condition that the distance between the respective interconnected voxel-arrangements is lower than a distance threshold.

8. The computer-implemented method of any one of the preceding claims, wherein creating glue voxels (214) for connecting different interconnected voxel-arrangements is performed at least by creating glue voxels (214) on a side of the interconnected voxel-arrangements facing away from the display means (120), in particular on a side of the interconnected voxel-arrangements facing essentially orthogonally away from the display means (120).

9. The computer-implemented method of claim 8, wherein the number of glue voxels (214) being created adjacent to each other in a direction facing away from the display means (120), is determinable and/or adjustable, preferably by the user (200).

10. The computer-implemented method of any one of the preceding claims, wherein creating glue voxels (214) for connecting different interconnected voxel-arrangements is performed at least by creating glue voxels (214) on a side of the interconnected voxel-arrangements facing away from the depth sensing device (110), in particular on a side of the interconnected voxel-arrangements facing essentially orthogonally away from the depth sensing device (110).

11. The computer-implemented method of claim 10, wherein the number of glue voxels (214) being created adjacent to each other in a direction facing away from the depth sensing device (110), is determinable and/or adjustable, preferably by the user (200).

12. The computer-implemented method of any one of claims 8-11, wherein created glue voxels (214) are locked to respective interconnected voxel-arrangements at least during usage of the computer device.

13. Use of a glue voxel (214) in a method according to any one of claims 1-12.

14. A data processing apparatus, preferably a computer device (100) or a control unit for a computer device (100), comprising means for carrying out the method of any one of claims 1 to 12.

15. A computer program or a computer-readable medium having stored thereon the computer program, the computer program comprising instructions which, when the program is executed by a computer, preferably a data processing apparatus according to claim 14, causes the computer to carry out the method of any one of claims 1 to 12.
